# EUROPÄISCHE PATENTANMELDUNG

(11) **EP 2 169 698 A1**
(43) Veröffentlichungstag der Anmeldung: **31.03.2010**
(21) Anmeldenummer: 09170891.7
(22) Anmeldetag: 22.09.2009
(51) Int. Cl.: H01H 13/72

(54) **Tastschalteranordnung für ein Haushaltsgerät, insbesondere Dunstabzugsvorrichtung**

(30) Priorität: 30.09.2008 DE 102008042491
(71) Anmelder: BSH Bosch und Siemens Hausgeräte GmbH, 81739 München (DE)
(72) Erfinder: Rohrbach, Peter, 75203 Königsbach-Stein (DE); Uebele, Volkmar, 61231 Bad Nauheim (DE)

(57) **Zusammenfassung**

Die Erfindung betrifft eine Tastschalteranordnung für ein Haushaltsgerät, insbesondere Dunstabzugsvorrichtung, mit einer Reihe von Drucktastern (7, 12 bis 15) zum Aktivieren von Haushaltsgeräte-Funktionen, und einer Beleuchtungseinrichtung (17), die bei Betätigung eines der Drucktaster (7, 12 bis 15) einschaltbar ist. Dabei ist jedem der Drucktaster (7, 12 bis 15) ein gemeinsamer Beleuchtungsschalter (37) zugeordnet, der bei Betätigung durch einen der Drucktaster (7, 12 bis 15) die Beleuchtungseinrichtung (17) einschaltet.

## Beschreibung

Die Erfindung betrifft eine Tastschalteranordnung für ein Haushaltsgerät, insbesondere Dunstabzugsvorrichtung, nach dem Oberbegriff des Patentanspruches 1 sowie ein Haushaltsgerät nach dem Patentanspruch 16.

Eine Eingabeeinheit eines Haushaltsgerätes kann eine Betriebsbeleuchtung aufweisen, die anzeigt, dass das Eingabemodul in Bereitschaft geschaltet ist. Zusätzlich zur Betriebsbeleuchtung kann die Eingabeeinheit eine Symbol- oder Funktionsbeleuchtung aufweisen, die bei betätigtem Drucktaster dessen Anzeigesymbolmaske hinterleuchtet und somit eine Tastenbetätigung des gedrückten Drucktasters anzeigt.

Eine gattungsgemäße Tastschalteranordnung für ein Haushaltsgerät, insbesondere eine Dunstabzugsvorrichtung, weist eine Reihe von Drucktastern zum Aktivieren von Haushaltsgeräte-Funktionen auf. Außerdem ist eine Beleuchtungseinrichtung vorgesehen, die bei Betätigung eines der Drucktaster eingeschaltet wird.

Beim Einsatz in einer Dunstabzugsvorrichtung weist die gattungsgemäße Tastschalteranordnung eine Reihe von Drucktastern auf, mit der unterschiedliche Leistungsstufen des Lüftergebläse-Motors einstellbar sind oder Beleuchtungselemente der Dunstabzugshaube einschaltbar sind. Zur Ansteuerung des Lüftergebläse-Motors trägt jeder der Drucktaster einen Motorkontakt zum Schließen des jeweiligen Leistungsstromkreises.

Zusätzlich zum Motorkontakt trägt jeder der Drucktaster einen Kontakt für die Funktions- oder Betriebsbeleuchtung der Tastschalteranordnung. Ein solcher Doppelkontakt ist bauteilaufwendig für jeden der Leistungsstufen-Drucktaster vorgesehen. Zusätzlich ist jedem der Leistungsstufen-Drucktaster bauteilaufwendig eine LED zugeordnet, die bei Betätigung eines der Drucktaster dessen Anzeigesymbolmaske hinterleuchtet.

Die Aufgabe der Erfindung besteht darin, eine Tastschalteranordnung für ein Haushaltsgerät, insbesondere Dunstabzugsvorrichtung, bereitzustellen, die im Sinne einer Bauteilreduzierung einfach aufgebaut ist.

Die Aufgabe ist durch die Merkmale des Patentanspruches 1 gelöst. Vorteilhafte Weiterbildungen der Erfindung sind in den Unteransprüchen offenbart.

Gemäß dem kennzeichnenden Teil des Patentanspruches 1 ist jedem der Drucktaster der Tastschalteranordnung ein gemeinsamer Beleuchtungsschalter zugeordnet. Der gemeinsame Beleuchtungsschalter kann daher mit jedem der Drucktaster zusammenwirken, so dass er bei Betätigung durch einen der Drucktaster die Beleuchtungseinrichtung einschaltet.

Mit dem gemeinsamen Beleuchtungsschalter kann darauf verzichtet werden, jeden Drucktaster mit einem aufwendigen Doppelkontakt auszubilden, bei dem sowohl ein elektrisches Schaltelement für die Tastschalteranordnung als auch ein elektrisches Schaltelement für die Aktivierung der Haushaltsgeräte-Funktion erforderlich ist. Die Drucktaster der erfindungsgemäßen Tastschalteranordnung tragen daher lediglich einen Kontakt bzw. ein Schaltelement zur Aktivierung einer Haushaltsgeräte-Funktion, jedoch kein elektrisches Schaltelement zur Aktivierung der Funktions- oder Betriebsbeleuchtung.

Die Beleuchtungseinrichtung der Tastschalteranordnung kann eine Betriebsbeleuchtung sowie Funktionsbeleuchtungen aufweisen. Die Betriebsbeleuchtung kann allgemein die Betriebsbereitschaft der Tastschalteranordnung anzeigen und durch ein erstmaliges Betätigen eines der Druckschalter eingeschaltet werden. Beispielhaft kann jeder der Drucktaster eine als Lichtleiter gestaltete Umrahmung aufweisen, die mit einer Lichtquelle, etwa einer LED, gekoppelt ist.

Die Umrahmung kann in Abhängigkeit von der Formgebung der Drucktaster rechteckig oder rund sein. Je nach Ausführung der Umrahmung bzw. Leuchtkraft der LED kann lediglich ein Rahmenbereich der Umrahmung leuchten. Alternativ und/oder zusätzlich kann die Beleuchtungseinrichtung Funktionsbeleuchtungen aufweisen, insbesondere Symbolbeleuchtungen, die eine Druckbetätigung des jeweiligen Drucktasters anzeigen. Bei Betätigung eines der Drucktaster kann somit dessen Anzeigesymbolmaske mittels der zugeordneten Symbolbeleuchtung hinterleuchtet werden, und zwar unabhängig von den Symbolbeleuchtungen der benachbarten, nicht eingedrückten Drucktaster.

Für eine Bewegungskopplung der Drucktaster mit dem gemeinsamen Beleuchtungsschalter kann jeder der Drucktaster mit zumindest einem Bewegungsübertragungselement versehen sein, das eine Druckbewegung der Drucktaster in eine Schaltbewegung des Beleuchtungsschalters umwandeln kann. Bei Betätigung des Drucktasters wird eine Schaltbewegung auf den Beleuchtungsschalter ausgeübt, wodurch die Beleuchtung aktiviert wird.

In einer mechanisch einfachen Ausführung kann das Bewegungsübertragungselement ein Schieber sein. Der Schieber kann Steuerflächen aufweisen, die mit einem Steuernocken des Drucktasters in Anlage bringbar sind. Bei einer Druckbetätigung des Drucktasters kann dessen Steuernocken gegen eine korrespondierende Steuerfläche des Schiebers drücken, wodurch dieser in eine Schaltbewegung versetzt wird. Bauraumgünstig kann der Schieber quer zu einer Druckbetätigungsrichtung der Drucktaster ausgerichtet sein, d. h. als Querschieber mit um 45° geneigten Steuerflächen gestaltet sein.

Der oben erwähnte Schieber kann mehrteilig aus separaten Schiebersegmenten bestehen, von denen jedes der Schiebersegmente einem Drucktaster zugeordnet ist und bei Betätigung des Drucktasters die Schaltbewegung ausführen kann. Die Schiebersegmente des Schiebers können in Reihe hintereinander sowie in Anlage angeordnet sein. Wird daher eines der Schiebersegmente über einen betätigten Drucktaster mit einer Schaltbewegung beaufschlagt, so wird die Schaltbewegung unmittelbar auf die weiteren Schiebersegmente übertragen, die in dem Bewegungsübertragungsweg zwischen dem eingedrückten Drucktaster und dem Beleuchtungsschalter eingeschaltet sind.

Der gemeinsame Beleuchtungsschalter kann in einer elektromechanisch einfachen Ausführung ein, in einem Stromversorgungskreis der Beleuchtungseinrichtung geschaltetes Kontaktpaar, die voneinander getrennt sind, sowie ein Schalterelement aufweisen, das bei einer Druckbetätigung eines der Druckschalter in Anlage mit dem Kontaktpaar kommt und die beiden Kontakte elektrisch leitend überbrückt.

Jeder der Drucktaster kann zwischen einer Ruhestellung und einer Druckstellung verstellt werden, in der die jeweils zugeordnete Haushaltsgeräte-Funktion aktiviert ist. Zum Halten der Druckstellung kann die Tastschalteranordnung eine Falle aufweisen. Diese verriegelt in ihrer Verriegelungsposition den betätigten Drucktaster in seiner Druckstellung und gibt in ihrer Entriegelungsposition den Drucktaster in seine Ruhestellung frei. Die Falle kann mittels eines Federelementes in ihre Verriegelungsposition vorgespannt sein.

Zum Verstellen der Falle von der Verriegelungsposition in ihre Entriegelungsposition kann ein separater Rückstelltaster vorgesehen sein, der in Reihe mit den weiteren Drucktastern geschaltet ist. Bei einem Drücken des Rückstelltasters wird somit der in Druckstellung befindliche Taster zurück in seine Ruhelage verbracht.

Zusätzlich kann der Drucktaster neben seinem Steuernocken einen Verriegelungsnocken aufweisen, der mit einer Steuerkontur der Falle zusammenwirkt. Bei Betätigung des Drucktasters kann so die Falle mittels des Drucktaster-Verriegelungsnockens in ihre Entriegelungsposition geschoben werden. Auf diese Weise ist gewährleistet, dass stets nur ein Drucktaster in Druckstellung ist und bei Betätigung eines weiteren Drucktasters der vorher gedrückte Drucktaster wieder zurück in die Ruhestellung bringbar ist. Hierzu können die Drucktaster in bekannter Weise mittels Federelemente in die Ruhelage vorgespannt sein.

Alternativ und/oder zusätzlich zu den vorangegangenen Weiterbildungen der Erfindung können die Funktions- bzw. Symbolbeleuchtungen der Druckschalter nicht jeweils eine separate LED aufweisen, sondern können den Funktionsbeleuchtungen der Druckschalter einer gemeinsamen Lichtquelle zugeordnet sein. Auf diese Weise kann der Bauteilaufwand in Hinblick auf elektronischen Komponenten weiter reduziert werden.

Die Funktionsbeleuchtungen der Drucktaster können bevorzugt über eine Lichtleiter-Anordnung mit der gemeinsamen Lichtquelle optisch gekoppelt bzw. entkoppelt werden. Hierzu kann die Lichtleiter-Anordnung einen ortsfesten zentralen Lichtleiter aufweisen, der sich leistenförmig entlang der Drucktaster-Reihe erstreckt. Der zentrale Lichtleiter kann fest mit der Lichtquelle verbunden sein sowie mit Drucktaster-Lichtleitern zusammenwirken. Die Drucktaster-Lichtleiter können bei Druckbetätigung mit dem zentralen Lichtleiter optisch gekoppelt bzw. in Drucktaster-Ruhestellung beabstandet vom zentralen Lichtleiter angeordnet sein, d. h. optisch entkoppelt vom zentralen Lichtleiter sein. Auf diese Weise wird jeweils nur in Druckstellung des Drucktasters Licht zur Funktionsbeleuchtung geleitet.

Erfindungsgemäß kann daher darauf verzichtet werden, jedem Drucktaster mit einer eigener LED auszustatten. Anstelle einer solchen LED weisen die Drucktaster der Erfindung als optische Elemente die Lichtleiter auf, die mit der gemeinsamen LED koppelbar sind.

Nachfolgend ist ein Ausführungsbeispiel der Erfindung anhand der beigefügten Figuren beschrieben.

Es zeigen:
Fig.1 1 in einer vergrößerten Teilansicht eine Bedienseite einer Sichthaube einer Dunstabzugsvorrichtung mit einer Reihe von Drucktastern zur Betätigung der Dunstabzugsvorrichtung;
Fig. 2 in einer grob schematischen Darstellung die Reihe von Drucktastern mit zugeordnetem Beleuchtungs-Stromkreis;
Fig. 3 eine der Fig. 2 entsprechende Ansicht mit einem betätigten Drucktaster; und
Fig.4 in einer Prinzipdarstellung die Beleuchtungseinrichtung der Tastschalteranordnung.

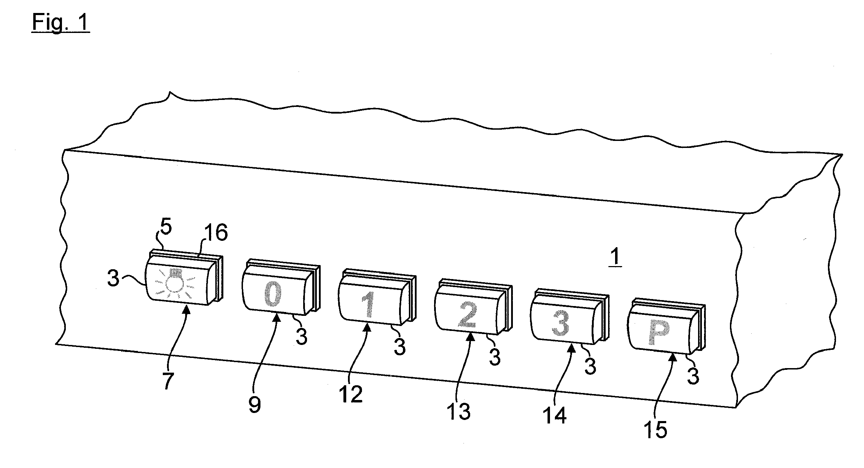

In der Fig. 1 ist die Bedienseite 1 einer Sichthaube einer Dunstabzugsvorrichtung gezeigt, die eine Reihe von Drucktastern aufweist. Jeder der Drucktaster ist an der Bedienseite 1 der Sichthaube mit einer in etwa rechteckförmigen Drucktaster-Kappe 3 durch eine Montageöffnung 5 in der Sichthauben-Bedienseite 1 geführt. Auf den Stirnseiten der jeweiligen Drucktaster-Kappen 3 sind Anzeigesymbolmasken aufgebracht, die jeweils die Funktion symbolisieren, die bei Betätigung des Drucktasters aktivierbar ist. Die Anzeigesymbolmasken können in bekannter Weise laserbearbeitete Lackbeschichtungen sein, die jeweils auf einem transparenten Trägersubstrat der jeweiligen Drucktaster-Kappen 3 aufgebracht sind.

So weist die in der Fig. 1 gezeigte Tastschalteranordnung einen Drucktaster 7 zur Betätigung einer Sichthauben-Beleuchtung und einen Drucktaster 9 zum Rückstellen eingedrückter Drucktaster auf. Mit den weiteren Drucktastern 12 bis 15 können die Leistungsstufen 1, 2, 3 und P eines Lüftergebläse-Motors eingestellt werden. Mit P ist eine Intensivleistungsstufe des Motors bezeichnet.

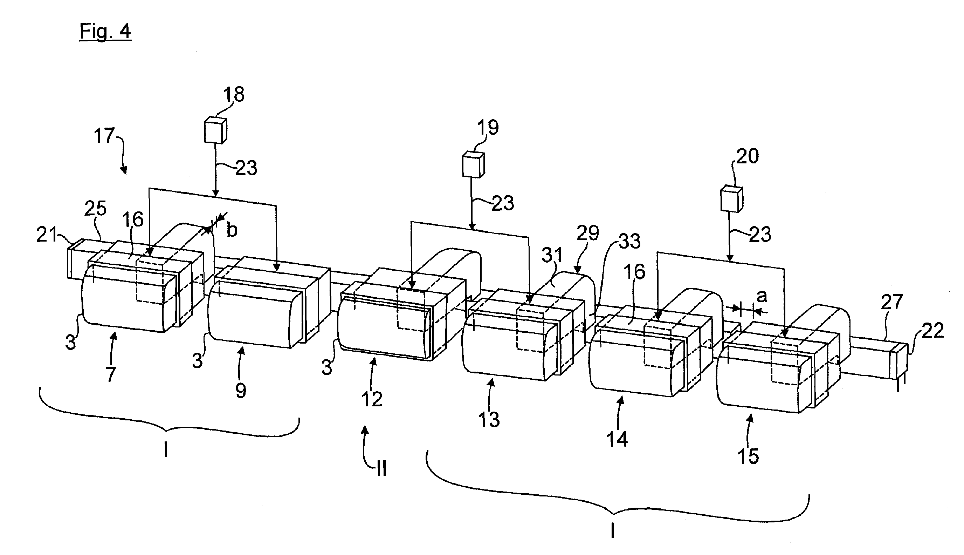

Jeder der Drucktaster weist gemäß der Fig. 1 eine Umrahmung 16 auf, die geringfügig durch die Montageöffnungen 5 der Sichthauben-Bedienseite 1 ragt. Die Umrahmungen 16 sind als transparente Lichtleiter gebildet und Bestandteil einer Beleuchtungseinrichtung 17 der Tastschalteranordnung, wie sie in der Fig. 4 gezeigt ist.

In der Fig.4 ist die Beleuchtungseinrichtung 17 der Tastschalteranordnung ohne elektromechanische Bestandteile lediglich mit den zur Lichtführung relevanten Teilen gezeigt. Demzufolge weist die Beleuchtungseinrichtung 17 als Lichtquellen insgesamt fünf LEDs 18 bis 22 auf. Davon sind die LEDs 18, 19, 20 einer Betriebsbeleuchtung der Beleuchtungseinrichtung 17 zugeordnet.

Die Betriebsbeleuchtung wird bei Drücken eines der Drucktaster 12 bis 15 aktiviert und zeigt eine Betriebsbereitschaft der Tastschalteranordnung an. Zur Anzeige der Betriebsbereitschaft sind die LEDs 18, 19, 20 über lediglich als Pfeile angedeuteten Lichtleiter 23 mit den Umrahmungen 16 optisch gekoppelt. Die insgesamt sechs Drucktaster sind mit ihren Umrahmungen 16 paarweise den drei LEDs 18, 19, 20 zugeordnet.

Zusätzlich zur Betriebsbeleuchtung weist die Beleuchtungseinrichtung 17 Funktionsbeleuchtungen auf, die jeweils die in der Fig. 1 gezeigten Symbole der Druckschalter-Kappen 3 hinterleuchten können, sofern der zugeordnete Drucktaster gedrückt ist. Die Drucktaster 7 sowie 12 bis 15 können zwischen einer Ruhestellung I und einer Druckstellung II verstellt werden. In der Druckstellung II sind jeweils die zugeordnete Leistungsstufe 1, 2, 3 oder P bzw. die Dunstabzugshauben-Beleuchtung aktiviert.

Für die Symbolbeleuchtungen der Drucktaster 7, 12 sowie 13 und 14 ist eine gemeinsame LED 21 vorgesehen. Für die Funktionsbeleuchtung des, die Intensivleistungsstufe P des Lüftergebläse-Motors aktivierenden Drucktasters 15 ist separat eine weitere LED 22 vorgesehen, die sich farblich von der Symbolbeleuchtungsfarbe der LED 21 unterscheidet. Der Rückstelltaster bzw. Reset-Taster 9 ist demgegenüber ohne Funktionsbeleuchtung vorgesehen.

Die gemeinsame LED 21 ist gemäß der Fig. 4 mit einem zentralen Lichtleiter 23 optisch gekoppelt. Der zentrale Lichtleiter 25 ist leistenförmig gestaltet. An einer seiner Stirnseiten ist die LED 21 vorgesehen. Der Lichtleiter 25 erstreckt sich quer zu den Drucktastern 7, 9, 12 bis 14. Mit Abstand a zum zentralen Lichtleiter 25 ist fluchtend ein weiterer, quer zum Drucktaster 15 verlaufender Lichtleiter 27 angeordnet, der mit der farblich unterschiedlichen LED 22 optisch gekoppelt ist.

Zusätzlich zum zentralen Lichtleiter 25 weisen die Drucktaster 7, 12, 13 und 14 fest mit den Drucktaster-Kappen 3 verbundene Drucktaster Lichtleiter 29 auf. Jeder der Lichtleiter 29 ist gemäß der Fig. 4 in etwa L-förmig gestaltet und ragt mit dem langen horizontalen L-Schenkel 31 in die jeweilige Drucktaster-Kappe 3 hinein, während der kurze vertikale L-Schenkel 33 außerhalb der Drucktaster-Kappe 3 nach unten abragt.

Beispielhaft sind in der Fig. 4 die Drucktaster 7, 13, 14, 15 in ihrer Ruhelage I gezeigt. In der gezeigten Ruhelage I ist der kurze L-Schenkel 33 des Drucktaster-Lichtleiters 29 über einen Abstand b seitlich versetzt zur Oberseite des zentralen Lichtleiters 25 angeordnet. Das heißt, dass bei aktivierter LED 21 lediglich geringfügig Licht in den Drucktaster-Lichtleiter 29 der in Ruhelage befindlichen Drucktaster 7, 13, 14, 15 eingeleitet werden kann. Das zugehörige Symbol des in Ruhestellung befindlichen Drucktasters wird somit nur sanft, nicht jedoch im Sinne einer Funktionsbeleuchtung hinterleuchtet.

Im Gegensatz dazu ist gemäß der Fig. 4 der Drucktaster 12 in seiner Druckstellung II gezeigt, in der das Lüftergebläse in der Leistungsstufe 1 arbeitet. In diesem Fall ist der Drucktaster-Lichtleiter 29 des Drucktasters 12 mit seinem kurzen L-Schenkel 33 unmittelbar über die Oberseite des zentralen Lichtleiters 25 geführt, wodurch der Drucktaster 12 optisch gekoppelt mit der LED 21 ist. Entsprechend wird über den Lichtleiter 29 das LED-Licht auf das Symbol "1" des Drucktasters 12 abgestrahlt.

Der Drucktaster 15 zur Aktivierung der Intensivleistungsstufe P ist gegenüber den anderen Drucktastern farblich durch eine separate Symbolbeleuchtungsfarbe hervorgehoben. Aus diesem Grund ist der Drucktaster 15 optisch entkoppelt von der LED 21. Der Drucktaster 15 ist baugleich mit den anderen Drucktastern 12 bis 15 ebenfalls mit einem Lichtleiter 29 ausgebildet, der bei einer Druckbetätigung die Oberseite des separaten Lichtleiters 27 überlagert und somit optisch gekoppelt mit der LED 22 ist.

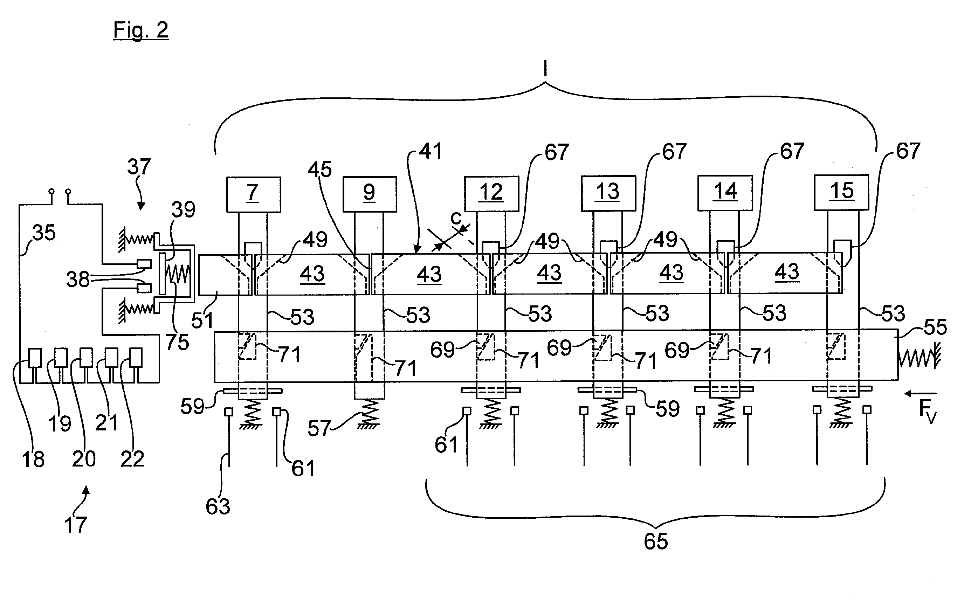

In der Fig. 2 ist in einer Prinzipdarstellung der Stromversorgungskreis 35 der LEDs 18 bis 22 der Beleuchtungseinrichtung 17 gezeigt. Dem Stromversorgungskreis 35 ist ein Beleuchtungsschalter 37 zur Aktivierung der Beleuchtungseinrichtung 17 geschaltet. Der Beleuchtungsschalter 37 weist ein Paar von Kontaktstellen 38 auf, die im Stromversorgungskreis 35 voneinander beabstandet integriert sind. Den beiden Kontaktstellen 38 ist ein bewegliches Schaltelement 39 zugeordnet, das bei Druckbetätigung der Drucktaster 7 bzw. 12 bis 15 die beiden elektrischen Kontakte 38 elektrisch schließt.

Erfindungsgemäß ist der Beleuchtungsschalter 37 über später beschriebene Bewegungsübertragungselemente mit den Drucktastern 7, 12 bis 15 bewegungsgekoppelt, die bei Druckbetätigung die Beleuchtungseinrichtung 17 einschalten können. Hierzu wird die Bewegung der Drucktaster 7, 12 bis 15 mittels der Bewegungsübertragungselemente in eine Schaltbewegung des Schaltelements 39 umgewandelt.

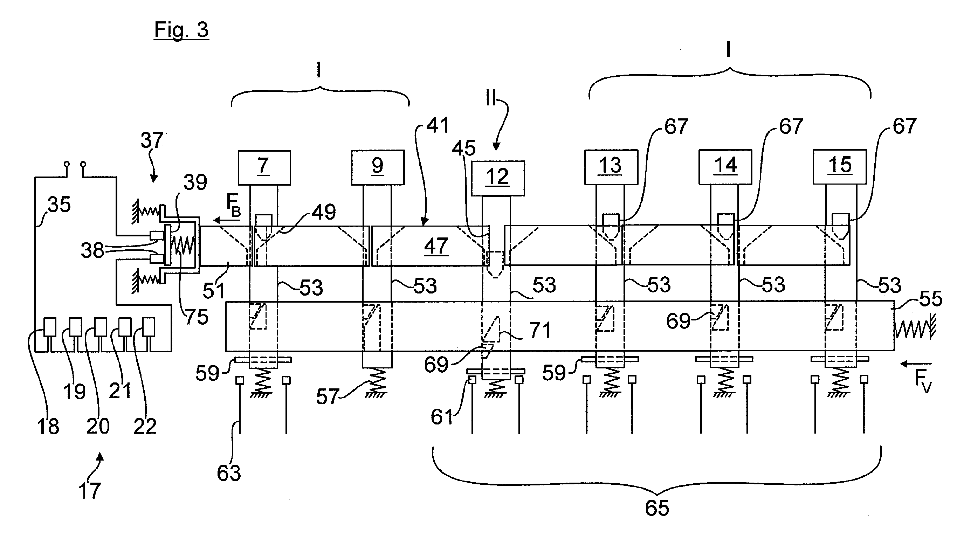

Das Bewegungsübertragungselement ist gemäß der Fig. 2 oder 3 ein Querschieber 41, der separate Schiebersegmente 43 aufweist. Die Schiebersegmente 43 sind gemäß der Fig. 2 in Reihe sowie über Anlagekanten 45 in Kontakt hintereinander angeordnet.

Die plattenförmigen Schiebersegmente 43 sind zu einer Segment-Mittelachse symmetrisch ausgebildet und weisen in Schieber-Längsrichtung die stirnseitigen Anschlagkanten 45 auf. An jedem der Schiebersegmente 43 ist außerdem ein im Wesentlichen trapezförmiger Steuerkörper 47 angeformt. Der trapezförmige Steuerkörper 47 weist in Schieber-Längsrichtung abfallende Steuerwangen auf, die jeweils seitliche, um in etwa 45° abfallende Steuerflächen 49 bereitstellen. Die Steuerflächen 49 des Steuerkörpers 47 werden in Längsrichtung von den Anschlagkanten 45 überragt. Das zwischen dem Kontaktschalter 37 und dem Drucktaster 7 geschaltete Schiebersegment 51 ist im Unterschied zu den benachbarten Schiebersegmenten 47 als Kontaktschieber über einen vorgegebenen Schaltweg gegen den Beleuchtungsschalter 37 zu drücken. Der Kontaktschieber 51 weist lediglich eine, mit dem Drucktaster 7 zusammenwirkende Steuerfläche 49 auf.

Sämtliche, in der Fig. 2 gezeigte Drucktaster 7, 9 sowie 12 bis 15 sind jeweils mit einem langgestreckten Drucktaster-Stößel 53 versehen, der räumlich versetzt den Querschieber 41 sowie eine später beschriebene, leistenförmige Falle 55 überkreuzt. Am nach unten ragenden Stößelende greift jeweils eine Rückstellfeder 57 an, die die Druckschalter in ihre dargestellte Ruhestellung I vorspannt. Die Stößelenden tragen außerdem angedeutete Schaltelemente 59. Mit dem Schaltelement 59 des Drucktasters 7 ist demgemäß ein Kontaktpaar 61 eines nur angedeuteten Stromkreises 63 für die Dunstabzugshauben-Beleuchtung zu schließen. In analoger Weise können die Schalterelemente 59 der Drucktaster 12 bis 15 bei Druckbetätigung Kontaktpaare 61 eines angedeuteten Stromversorgungskreislaufes 65 zur Motorsteuerung öffnen bzw. schließen.

Mit Ausnahme des Rückstellschalters 9 sind die Tasterstößel 53 der Drucktaster mit einem Steuernocken 67 versehen, der symmetrisch ausgebildete, in Richtung Stößelende pfeilförmig zulaufende Steuerflächen aufweist. In der, in der Fig. 2 dargestellten Ruhestellung I der Drucktaster sind die Steuernocken 67 über eine Bewegungsluft c von den Steuerflächen 49 der Querschiebersegmente 43 beabstandet. Zusätzlich sind an den Tasterstößeln 53 der Drucktaster Verriegelungsnocken 69 angeformt, die mit korrespondierenden Steuerkonturen 71 der Falle 55 zusammenwirken.

In der Fig. 3 ist die Tastschalteranordnung mit aktiviertem Drucktaster 12 gezeigt. Der Drucktaster 12 befindet sich daher in seiner Druckstellung II, in der das zugeordnete Schaltelement 59 das Kontaktpaar 61 schließt, wodurch der Lüftergebläse-Motor mit der Leistungsstufe "1" angesteuert wird.

Bei der Druckbetätigung des Drucktasters 12 wird dessen Steuernocken 67 in Anlage mit den Steuerflächen 49 der mit dem Drucktaster 12 korrespondierenden Schiebersegmente 43 gedrückt. Dadurch werden die zwischen den Drucktaster 12 und dem Beleuchtungsschalter 37 geschalteten Schiebersegmente 43 bzw. der Kontaktschieber 51 über einen Schaltweg in Richtung auf den Betätigungsschalter 37 verdrängt.

In gleicher Weise werden auch die außerhalb des Bewegungsübertragungsweges befindlichen Querschiebersegmente 43 über einen entgegengesetzten Verdrängungsweg, d.h. in der Fig. 3 nach rechts, verdrängt. Dieser Verdrängungsweg der Segmente gemäß der Fig.3 nach rechts kann durch die entsprechend dimensionierte Bewegungsluft c zwischen Drucktaster und Steuerflächen 49 der Segmente 43 aufgenommen werden.

Bei der Druckbetätigung des Drucktasters 12 überwindet der Verriegelungsnocken 69 die Steuerkontur 71 der federvorgespannten Falle 55 und hintergreift diese Steuerkontur 71, wie es in der Fig. 3 gezeigt ist. Auf diese Weise bleibt der Drucktaster 12 in seiner Druckstellung II, in der über die zwischen dem Beleuchtungsschalter 37 und dem Drucktaster 12 geschalteten Schiebersegmenten 43 sowie den Kontaktschieber 51 mit einer Betätigungskraft F_{B} auf den Beleuchtungsschalter 37 drückt. Dadurch ist das auf einer Ausgleichsfeder 75 abgestützte Schaltelement 39 gegen das Kontaktpaar 38 gedrückt, wodurch die Beleuchtungseinrichtung 17 eingeschaltet ist. Das Schaltelement 39 ist in einer hier becherförmig gestalteten Führung gelagert, die wiederum in Öffnungsrichtung vorgespannt ist.

Bei der Druckbetätigung des Druckschalters 12 werden somit sämtliche LEDs 18 bis 22 eingeschaltet. Dadurch ist einerseits die Betriebsbeleuchtung aktiviert. Andererseits versorgt die LED 21 über den zentralen Lichtleiter 25 sowie den Drucktaster-Lichtleiter 31 den Drucktaster 12 mit Licht, so dass die Funktionsbeleuchtung des Drucktasters 12 aktiviert ist.

Der Drucktaster 12 kann durch Drücken des Rückstell-Druckschalters 9 in seine Ruhestellung II zurückgestellt werden. Beim Drücken des Rückstell-Drucktasters 9 wird die Falle 55 in ihre Entriegelungsposition verbracht, und zwar unter Freigabe des Drucktasters 12, der mittels der Rückstellfeder 57 in die Ruhstellung geschoben wird. Die dem Rückstell-Drucktaster 9 zugeordnete Steuerkontur ist im Unterschied zu den anderen Steuerkonturen 71 hinterschneidungsfrei gestaltet, so dass der Rückstell-Drucktaster 9 nach Druckbetätigung sofort in die Ruhestellung rückgeführt wird.

Alternativ zur Betätigung des Rückstell-Drucktasters 9 kann einer der Drucktaster 7, 13 bis 15 betätigt werden. Dadurch gelangt die Falle 55 ebenfalls kurzzeitig in die Entriegelungsposition, wodurch der Drucktaster 12 rückgestellt wird und anstelle dessen der nunmehr betätigte Drucktaster in der Druckstellung verbleibt.

### BEZUGSZEICHENLISTE

- 1: Bedienseite
- 3: Drucktaster-Kappe
- 5: Montageöffnungen
- 7, 9, 12 bis 15: Drucktaster
- 16: Umrahmungen
- 17: Beleuchtungseinrichtung
- 18 bis 22: LEDs
- 23: Lichtleiter
- 25: zentraler Lichtleiter
- 27: Lichtleiter
- 29: Drucktaster-Lichtleiter
- 31: langer L-Schenkel
- 33: kurzer L-Schenkel
- 35: Stromversorgungskreis der Beleuchtungseinrichtung 17
- 37: Beleuchtungsschalter
- 38: Kontaktpaar
- 39: Schalterelement
- 41: Bewegungsübertragungselement
- 43: Schiebersegmente
- 45: Anlagekanten
- 47: Steuerkörper
- 49: Steuerfläche
- 51: Kontaktschieber
- 53: Drucktaster-Stößel
- 55: Falle
- 57: Rückstellfeder
- 59: Schalterelement
- 61: Kontaktpaar
- 63: Stromversorgungskreis der Beleuchtung der Dunstabzugsvorrichtung
- 65: Stromversorgungskreis der Motorsteuerung
- 67: Steuernocken
- 69: Verriegelungsnocken
- 71: Steuerkontur
- 75: Ausgleichsfeder
- I: Ruhestellung
- II: Druckstellung

## Patentansprüche

1. Tastschalteranordnung für ein Haushaltsgerät, insbesondere Dunstabzugsvorrichtung, mit einer Reihe von Drucktastern (7, 12 bis 15) zum Aktivieren von Haushaltsgeräte-Funktionen, und einer Beleuchtungseinrichtung (17), die bei Betätigung eines der Drucktaster einschaltbar ist, **dadurch gekennzeichnet, dass** jedem der Drucktaster (7, 12 bis 15) ein gemeinsamer Beleuchtungsschalter (37) zugeordnet ist, der bei Betätigung durch einen der Drucktaster (7, 12 bis 15) die Beleuchtungseinrichtung (17) einschaltet.

2. Tastschalteranordnung nach Anspruch 1, **dadurch gekennzeichnet, dass** die Beleuchtungseinrichtung (17) eine Betriebsbeleuchtung (16, 18, 19, 20), die eine Betriebsbereitschaft der Tastschalteranordnung anzeigt, und/oder Funktionsbeleuchtungen (21, 25, 29), insbesondere Symbolbeleuchtungen, für jeden der Drucktaster (7, 12 bis 15) aufweist.

3. Tastschalteranordnung nach Anspruch 1 oder 2, **dadurch gekennzeichnet, dass** jeder der Drucktaster (7, 12 bis 15) in Wirkverbindung mit zumindest einem Bewegungsübertragungselement (41) ist, das bei Betätigung des Drucktasters (7, 12 bis 15) eine Schaltkraft (F_{B}) auf den Beleuchtungsschalter (37) ausübt.

4. Tastschalteranordnung nach Anspruch 3, **dadurch gekennzeichnet, dass** das Bewegungsübertragungselement (41) ein Schieber, insbesondere Querschieber, mit Steuerflächen (49) ist, die mit einem Steuernocken (67) des Drucktasters (7, 12 bis 15) zusammenwirken.

5. Tastschalteranordnung nach Anspruch 4, **dadurch gekennzeichnet, dass** der Schieber (41) separate Schiebersegmente (43) aufweist, von denen jedes Schiebersegment (43) einem Drucktaster (7, 12 bis 15) zugeordnet ist und bei Betätigung des Drucktasters (7, 12 bis 15) eine Schaltbewegung ausführt.

6. Tastschalteranordnung nach Anspruch 4 oder 5, **dadurch gekennzeichnet, dass** die Schiebersegmente (41) in Reihe sowie in Anlage hintereinander angeordnet sind.

7. Tastschalteranordnung nach Anspruch 5 oder 6, **dadurch gekennzeichnet, dass** die Schiebersegmente (41) in Abhängigkeit von der Lage des zu betätigenden Drucktasters (7, 12 bis 15) in variierender Anzahl in den Bewegungsübertragungsweg zwischen dem zu betätigenden Drucktaster (7, 12 bis 15) und dem Beleuchtungsschalter (37) einschaltbar sind.

8. Tastschalteranordnung nach einem der vorhergehenden Ansprüche, **dadurch gekennzeichnet, dass** der Beleuchtungsschalter (37) ein im Stromversorgungskreis (35) der Beleuchtungseinrichtung (17) geschaltetes Kontaktpaar (38) und ein Schalterelement (39) aufweist, das bei Druckbetätigung eines der Drucktaster (7, 12 bis 15) die Kontakte (38) elektrisch schließt.

9. Tastschalteranordnung nach einem der vorhergehenden Ansprüche, **dadurch gekennzeichnet, dass** jeder der Drucktaster (7, 12 bis 15) zwischen einer Ruhestellung (I) und einer Druckstellung (II) verstellbar ist, in der die zugeordnete Haushaltsgeräte-funktion aktiviert ist.

10. Tastschalteranordnung nach Anspruch 9, **dadurch gekennzeichnet, dass** der Reihe von Druckschalters (7, 12 bis 15) eine Falle (55) zugeordnet ist, die in ihrer Verriegelungsposition einen der Drucktaster in seiner Druckstellung (II) verriegelt, und in ihrer Entriegelungsposition den Drucktaster (7, 12 bis 15) in seine Ruhestellung (I) freigibt.

11. Tastschalteranordnung nach Anspruch 10, **dadurch gekennzeichnet, dass** die Tastschalteranordnung einen Rückstelltaster (9) aufweist, mit dem die Falle (55) in ihre Entriegelungsposition bringbar ist.

12. Tastschalteranordnung nach einem der Ansprüche 10 oder 11, **dadurch gekennzeichnet, dass** die Drucktaster (7, 12 bis 15) jeweils einen Verriegelungsnocken (69) aufweisen, der mit der Falle (55) zusammenwirkt, und dass bei Betätigung eines der Drucktaster (7, 12 bis 15) die Falle (55) mittels des Verriegelungsnocken (69) in ihre Entriegelungsposition verstellbar ist.

13. Tastschalteranordnung nach einem der vorhergehenden Ansprüche, **dadurch gekennzeichnet, dass** jeder der Drucktaster ein Schaltelement (59) trägt, das bei Drucktaster-Betätigung einen, der Hausgeräte-Funktion zugeordneten Schaltkreis (63, 65) schließt, etwa für eine Motoransteuerung oder für eine Haushaltsgeräte-Beleuchtung.

14. Tastschalteranordnung für ein Haushaltsgerät, insbesondere eine Dunstabzugsvorrichtung, insbesondere nach einem der vorhergehenden Ansprüche, mit einer Reihe von Drucktastern (7, 12, 13, 14) zum Aktivieren von Haushaltsgeräte-Funktionen, von welcher Drucktaster-Reihe jedem Druckschalter (7, 12, 13, 14) eine Funktionsbeleuchtung, insbesondere eine Symbolbeleuchtung, zugeordnet, ist, die bei Drucktaster-Betätigung unabhängig von den anderen, nicht betätigten Drucktastern einschaltet, **dadurch gekennzeichnet, dass** die Funktionsbeleuchtungen der Drucktaster (7, 12, 13, 14) einer gemeinsamen Lichtquelle (21) zugeordnet sind.

15. Tastschalteranordnung nach Anspruch 14, **dadurch gekennzeichnet, dass** die Funktionsbeleuchtung jedes der Drucktaster (7, 12 bis 14) über eine Lichtleiter-Anordnung (25, 29) mit der Lichtquelle (21) optisch koppelbar ist, und insbesondere die Lichtleiter-Anordnung (25, 29) einen ortsfesten zentralen Lichtleiter (25), mit der Lichtquelle (21) optisch gekoppelt ist, sowie Drucktaster-Lichtleiter (29) aufweist, die in der Druckstellung (11) der Drucktaster (7, 12 bis 14) optisch mit dem zentralen Lichtleiter (25) gekoppelt sind, und in Drucktaster-Ruhestellung (I) vom zentralen Lichtleiter (25) entkoppelt sind.

16. Haushaltsgerät, insbesondere Dunstabzugsvorrichtung, mit einer Tastschalteranordnung nach einem der vorhergehenden Ansprüche.
